# EUROPÄISCHE PATENTSCHRIFT

(11) **EP 1 927 229 B1**
(45) Veröffentlichungstag und Bekanntmachung des Hinweises auf die Patenterteilung: **21.01.2015**
(21) Anmeldenummer: 06762955.0
(22) Anmeldetag: 03.08.2006
(51) Int. Cl.: H04L 29/06, H04L 29/08, H04L 12/58

(54) **VERFAHREN UND SYSTEM ZUM VERTEILEN VON INFORMATIONEN MITTELS MEDIA DISTRIBUTION FUNCTION ZUR FESTEN IP-NETZWELT**
METHOD AND SYSTEM FOR THE DISTRIBUTION OF DATA TO THE FIXED IP NETWORK ENVIRONMENT BY MEANS OF A MEDIA DISTRIBUTION FUNCTION
PROCEDE ET SYSTEME POUR DISTRIBUER DES INFORMATIONS VERS LE SITE FIXE IP-NETZWELT AU MOYEN DE LA FONCTION DE DISTRIBUTION DE CONTENUS MULTIMEDIAS

(30) Priorität: 04.08.2005 DE 102005037318; 01.12.2005 DE 102005057649
(43) Veröffentlichungstag der Anmeldung: 04.06.2008
(73) Patentinhaber: T-Mobile International AG, 53227 Bonn (DE)
(72) Erfinder: BLICKER, Stephan, 53343 Wachtberg (DE)
(74) Vertreter: Riebling, Peter
(86) Internationale Anmeldenummer: PCT/EP2006/007672
(87) Internationale Veröffentlichungsnummer: WO 2007/014776

(56) Entgegenhaltungen:
- WO-A-2004/014050
- US-A1- 2004 224 710
- WILD J ET AL: "Push-to-talk: a first step to a unified instant communication future" EMERGING WIRELESS MULTIMEDIA: SERVICES AND TECHNOLOGIES, WILEY, NEW YORK, NY, US, 1. Juli 2005 (2005-07-01), Seiten 367-394, XP002367504
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-SA2, Nr. V620, Juni 2005 (2005-06), Seiten 1-39, XP014033254 ISSN: 0000-0001
- PAAVONEN T: "Push to talk over Cellular (PoC) Architecture, Draft Version 2.0" OMA DRAFT STANDARD, [Online] 27. Juni 2005 (2005-06-27), Seiten 1-165, XP002404176 Gefunden im Internet: URL:http://member.openmobilealliance.org/f tp/Public_documents/POC/2005/OMA-POC-2005- 0473R01-POC2-AD-baseline.zip> [gefunden am 2006-10-20]

## Beschreibung

Die Erfindung betrifft ein Verfahren und ein System zum Verteilen von Informationen in einem Kommunikationsnetz.

In Kommunikationsnetzen besteht das Bedürfnis, Informationen verschiedener Medien zwischen verschiedenen Netzen und Technologien austauschen zu können.

Der Artikel "Push-to-Talk: A First Step to a Unified Instant Communication Future", in: Engineering Wireless Multimedia: Services and Technologies, 2005, XP-002367504, ISBN: 0-470-02149-7, gibt einen Überblick über das sogenannte Push-to-Talk Verfahren, das Schnittstellen zur festen IP-Netzwelt, bereitstellt und bei dem Nutzer- und Signaldaten über ein eigens dafür bestimmtes Netzelement, einen Push-to-Talk-Server, übertragen werden.

Die Veröffentlichung US 2004/0224710 A1 betrifft ein System und Verfahren zur Bereitstellung von Diensten ein einer Push-to-Talk Umgebung, wobei ein Push-to-Talk Server vorgesehen ist, der einen Datenaustausch zwischen einem PTT Client und einem PTT Anwendungsserver ermöglicht.

Es ist die Aufgabe der Erfindung, ein Verfahren und ein System zum Verteilen von Informationen in einem Kommunikationsnetz anzugeben.

Diese Aufgabe wird erfindungsgemäß durch die Merkmale der unabhängigen Ansprüche gelöst, auf deren Inhalt an dieser Stelle verwiesen wird.

Bevorzugte Ausgestaltungen der Erfindung sind in den abhängigen Ansprüchen angegeben, auf deren Inhalt an dieser Stelle verwiesen wird.

Die Erfindung basiert auf einer neuartigen Medienverteilfunktion, MDF (Media Distribution Function), wobei der PoC Dienst (Push to Talk over Cellular) als ein Ermöglichungssystem für die Datenübertragung verwendet wird.
- Die Medienverteilfunktion MDF ist ein neues Netzelement, das Schnittstellen zur festen IP Netzwerkwelt aller wohl bekannten Anwendungen zur Verfügung stellt.
- Die MDF kann als Teil zukünftiger OMA PoC Architektur implementiert werden. Die OMA (Open Mobile Alliance) ist ein Zusammenschluss führender Dienstleistungs- und Produktanbieter aus dem Bereich Mobilfunk mit dem Ziel, marktfähige, interoperable digitale Dienste zu entwickeln und als Standard weltweit zu etablieren.

MDF Anwendungsfälle hohen Niveaus:
- Authentisierung der Teilnehmer gegenüber dem Zugriffsnetzwerk
- Umwandlung von Gruppen-E-Mails in PoC Sprache an Gruppen
- Umwandlung von Sofort-Nachrichten (Instant Speech) in PoC Sprache
- Klick-auf-Sprache (Video, nur Audio) auf einer Internet-Anwendung
- Ermöglicht Übertragung von Spielen/Anwendungen/Dokumenten über PoC auf Mobilgeräte von der Internet-Anwendung
- Dient als Schnittstelle zu Konferenz-Systemen
- Umwandlung von Audio-Nachrichten, Kurznachrichten, Bildnachrichten zu Poc
- Anbieten von PoC-Präsenz an Internet-Anwendungen
- Anbieten von PoC-Gruppeninformationen an Internet-Anwendungen

Anforderungen an die MDF
- Benötigt eine Schnittstelle zu OMA Gruppenverwaltung XDMS (XML Document Management Server)
- Benötigt eine Schnittstelle zu OMA Präsenz Server
- Benötigt eine Schnittstelle zu OMA PoC System
- Benötigt einen Authentifizierungsmechanismus (vielleicht auf SIM basierend, vielleicht auf RADIUS basierend)
- Erfordert eine Unterstützung von Protokollen nach Art des Internets (smtp, rtp, sip, http)

Nachfolgend wird ein Ausführungsbeispiel der Erfindung anhand der Zeichnungen näher erläutert.
Figur 1 zeigt eine Übersicht über die Architektur der MDF.
Figur 2 zeigt eine detaillierte Übersicht über die Architektur der MDF.
Figur 3 zeigt den Signalisierungsverlauf bei einer Authentisierung einer Clientanwendung gegenüber dem IMS Netzwerk.
Figur 4 zeigt den Signalisierungsverlauf bei einer Authentisierung eines Benutzers gegenüber einer Clientanwendung.
Figur 5 zeigt den Verfahrensablauf bei einer Übertragung von RTP Medien über den Push PoC Dienst an ein Endgerät 25.
Figur 6 zeigt XDMS Operationen zum Holen von Listen und Daten vom PoC XDMS Server.
Figur 7 zeigt XDMS Operationen zum Platzieren von Listen und Daten auf dem PoC XDMS Server.
Die Figur 8 zeigt mögliche Präsenz-Operationen in Verbindung mit dem PoC Präsens Server 12.

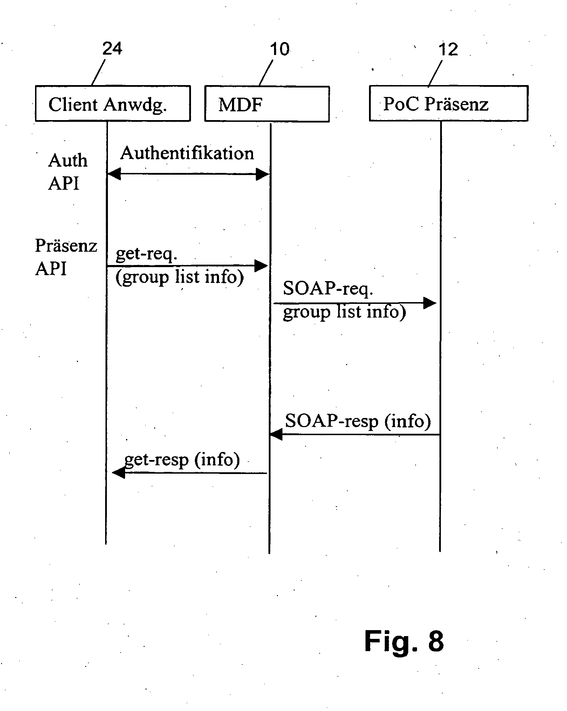

Die Figur 8 zeigt mögliche Präsenz-Operationen in Verbindung mit dem PoC Präsens Server 12.

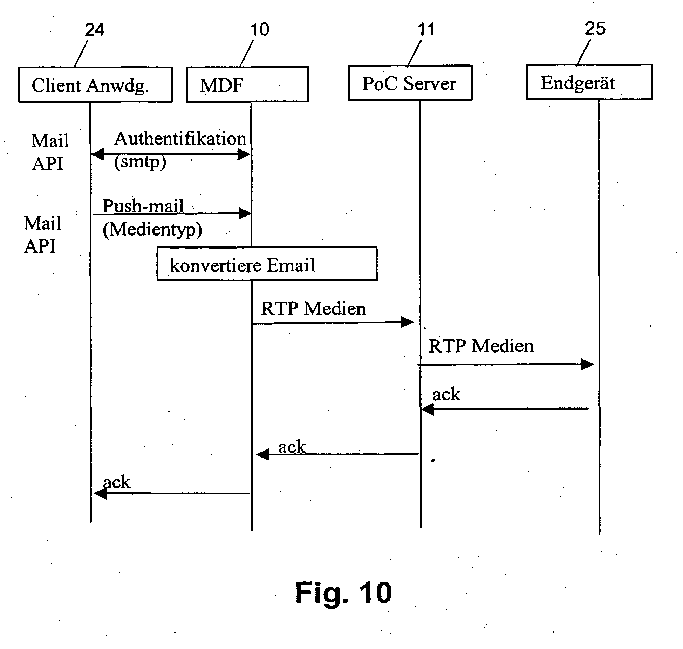

Figur 10 zeigt ein Beispiel für den Verfahrensablauf bei Mail-Operationen.

### Architektur der Medienverteilfunktion, MDF, 10:

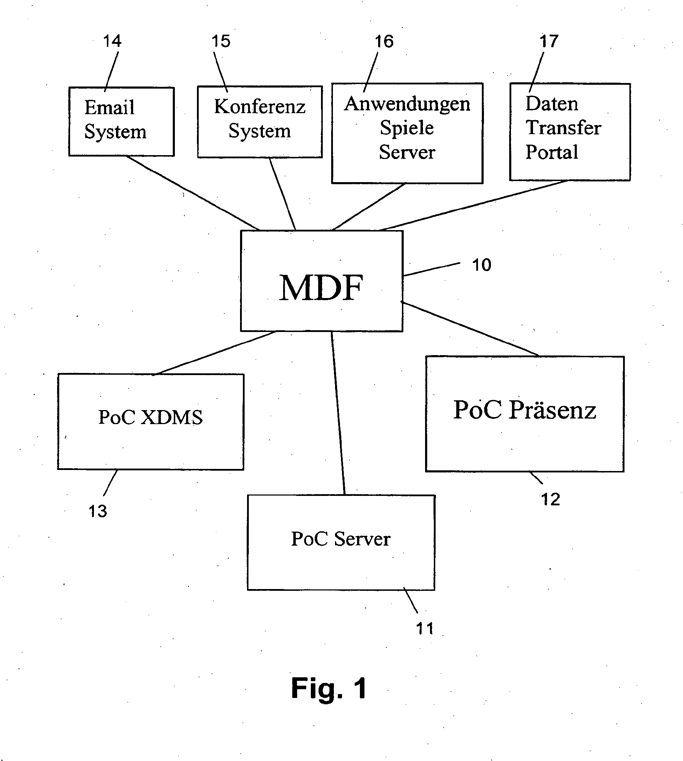

In Figur 1 ist schematisch die Architektur des Kommunikationsnetzes in Verbindung mit der Medienverteilfunktion, MDF, 10 dargestellt.

Die Medienverteilfunktion 10 ist über geeignete Schnittstellen mit einem PoC Server 11, einem PoC Präsenz Server 12 und einem PoC XDMS Server 13 verbunden. Auf der anderen Seite ist die Medienverteilfunktion 10 mit einem Email System 14, einem Konferenzsystem 15, einem Anwendungs- / Spieleserver 16, sowie einem Datenübertragungsportal 17 verbunden. Die MDF 10 ist in de Lage, Medien zwischen allen diesen Anwendungen und Anwendungsservern zu übertragen.

OMA Aufgaben (zukünftig) zur Einbindung der MDF 10.
- Standardisieren von MDF Funktionen
- Standardisieren von Schnittstellen, ITF, zwischen MDF 10 und XDMS PoC Server 13 und PoC Präsenz12.
- Spezifizieren von MDF-Aufgaben (wie oben gezeigt)

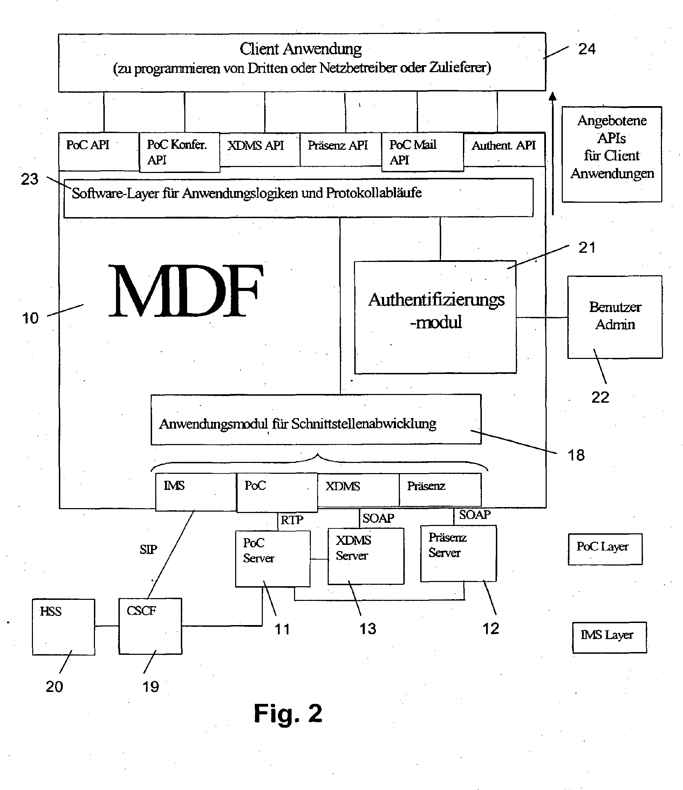

Figur 2 zeigt eine die Architektur der Medienverteilfunktion 10 im Detail. Die MDF 10 umfasst ein Anwendungsmodul für Schnittstellenabwicklung 18, welches beispielsweise über eine RTP Schnittstelle mit dem PoC Server 11 verbunden ist. Der PoC Server 11 ist mit einer Call State Control Function (CSCF) 19 und einem Home Subscriber Server (HSS) 20 verbunden, die beide Teil eines IMS (IP Multimedia Subsystems) sind. Über eine SIP Schnittstelle (Session Initiation Protocol) ist die Anwendungsmodul 18 der MDF 10 mit der CSCF 18 verbunden.

Der Präsens Server 12 und der XDMS Server 13 sind beide über SOAP Schnittstellen (Simple Object Access Protocol) mit den entsprechenden Funktionen des Anwendungsmoduls 18 der MDF 10 verbunden.

Ferner umfasst die MDF 10 ein Authentifizierungsmodul 21 zur Authentifizierung von Benutzern 22 oder Administratoren.

Weiterhin umfasst die MDF 10 einen Softwarelayer für Anwendungslogiken und Protokollabläufe 23, der über verschiedene Anwendungsprogrammierschnittstellen (API: Application Programming Interface), wie PoC API, XDMS API, etc., mit verschiedenen Clientanwendungen 24 verbunden ist.

Auf dieser Architektur basierend können folgende Szenarien betrachtet werden, sowohl Grunddienste als auch fortgeschrittene Dienste.

### Grunddienste

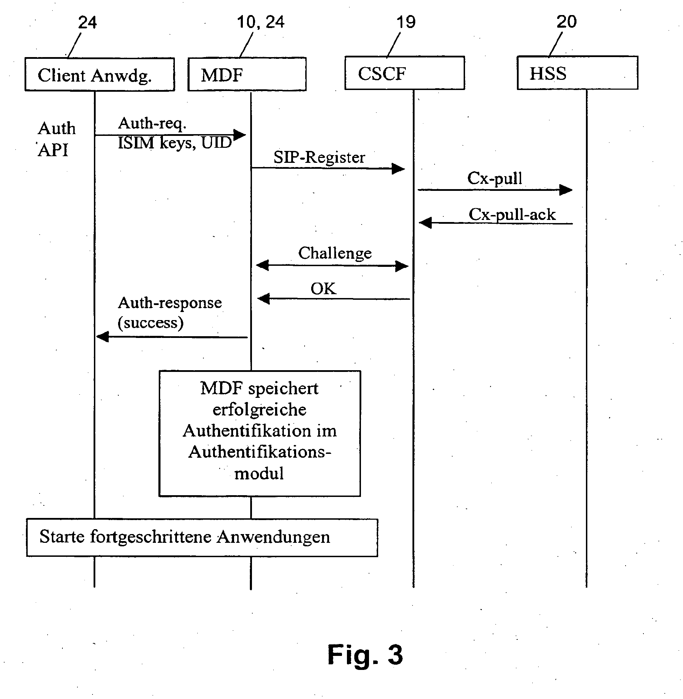

Figur 3 zeigt den Signalisierungsverlauf bei einer Authentifizierung einer Clientanwendung gegenüber dem IMS Netzwerk. Die Authentifizierung gegenüber dem IMS Netzwerk erfolgt mittels ISIM (IP Multimedia Services Identity Module) unter der Voraussetzung ist, dass ISIM in der Client Anwendung benutzt wird. Die MDF 10 speichert eine erfolgreiche Authentifizierung im Authentifizierungsmodul 21. Danach kann eine fortgeschrittene Anwendung gestartet werden.

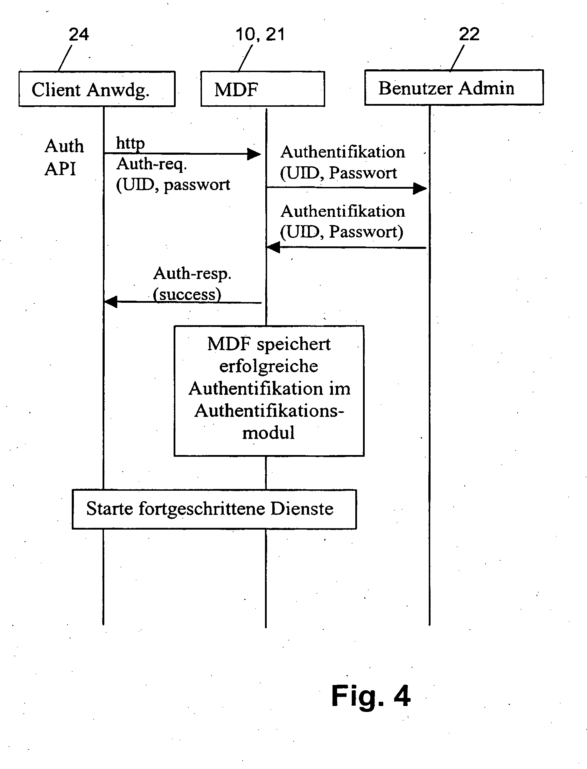

Figur 4 zeigt den Signalisierungsverlauf bei einer Authentifizierung eines Benutzers gegenüber einer Clientanwendung. Die Authentifizierung erfolgt beispielsweise mit Benutzername (UID: User Identification) und Kennwort. Die MDF 10 speichert eine erfolgreiche Authentifizierung im

Authentifizierungsmodul 21. Danach kann eine fortgeschrittene Anwendung gestartet werden. Fortgeschrittene Dienste

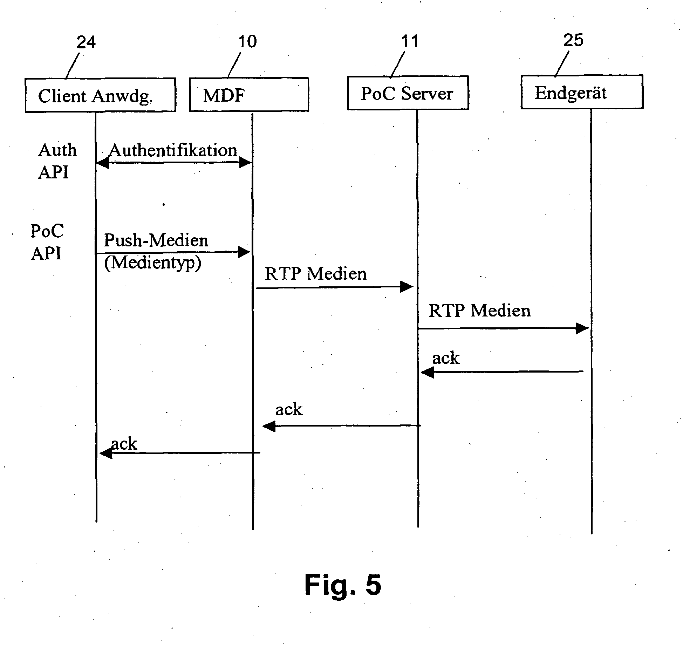

Figur 5 zeigt den Verfahrensablauf bei einer Übertragung von RTP Medien über den PoC Dienst an ein Endgerät 25. Folgende Dienste sind denkbar:
- "Push" Übertragung einer PoC-Nachricht über PoC API (Application Programming Interface) (z.B. Sprach-Bursts, Text zu Sprache, Sofort-Nachrichten, Spiele, Anwendungen, Dokumente, ...)
- Holen / Platzieren von Gruppenlisten
- Holen / Platzieren von Kontakt-Listen
- Holen / Platzieren von Zugangs Kontroll-Listen
- Holen / Platzieren von Präsenz Informationen

Für die benötigten PoC-Operationen muss die PoC API folgende Eigenschaften bereitstellen:
o Bestimmung der zu übertragenden Medien (Sprache, Test, Dokumente, Sofortnachrichten, Spiele, Klingeltöne,...)
o Übertragung der Medien auf den PoC-Server 11 (unter Verwendung der neuen RTP-Schnittstelle)
o Die MDF (Medienverteilfunktion) hat RTP-Pakete mit den entsprechenden Nutzlasttypen aufzubereiten

Das gleiche Verfahren kann auch im Zusammenhang mit der PoC Konferenz-API angewandt werden.

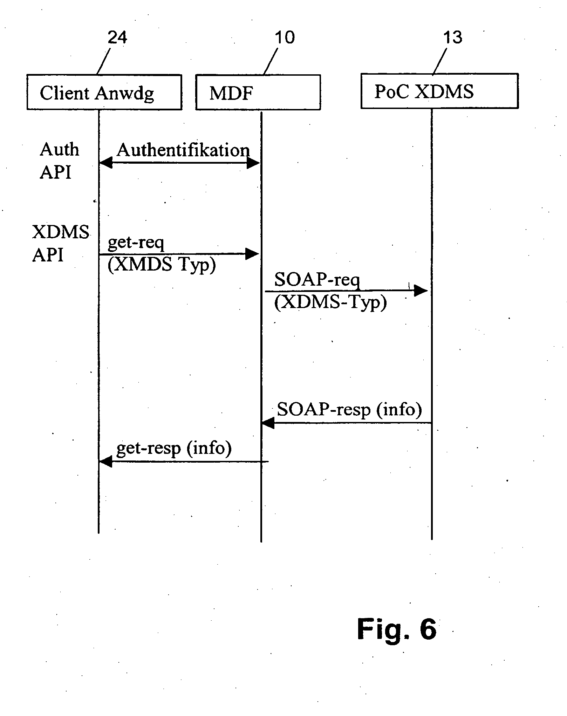

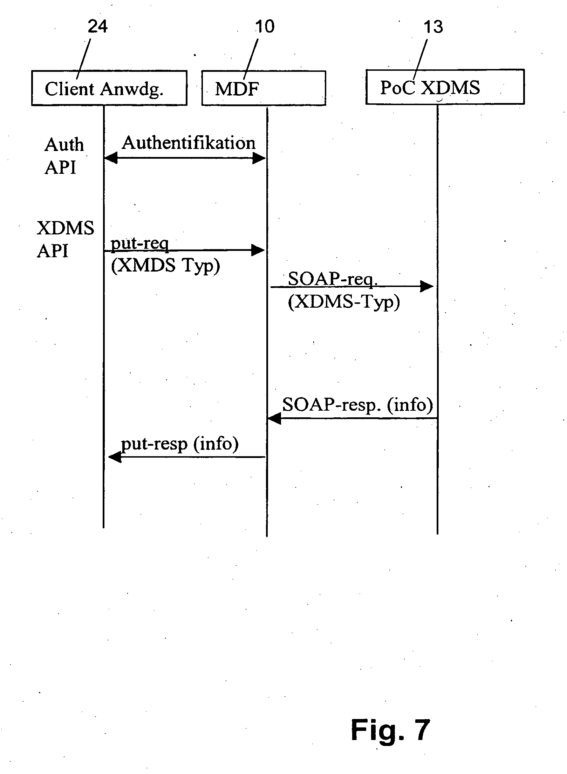

Die Figuren 6 und 7 zeigen XDMS Operationen zum Holen und Platzieren von Listen und Daten vom bzw. auf dem XMDS PoC Server 13:
Gemäß den Eigenschaften des XDMS API werden folgende XDMS-Typen unterstützt:
   o hole Zugangs Kontroll-Listen
   o platziere Zugangs-Kontroll-Listen
   o hole Gruppen-Daten
   o platziere Gruppen-Daten
   o hole Kontakt-Listen
   o platziere Kontakt-Listen

Dieses XDMS API ist Teil einer übergreifenden, allgemeinen Anwendung, API liefert den Zugang durch SOAP Schnittstelle.

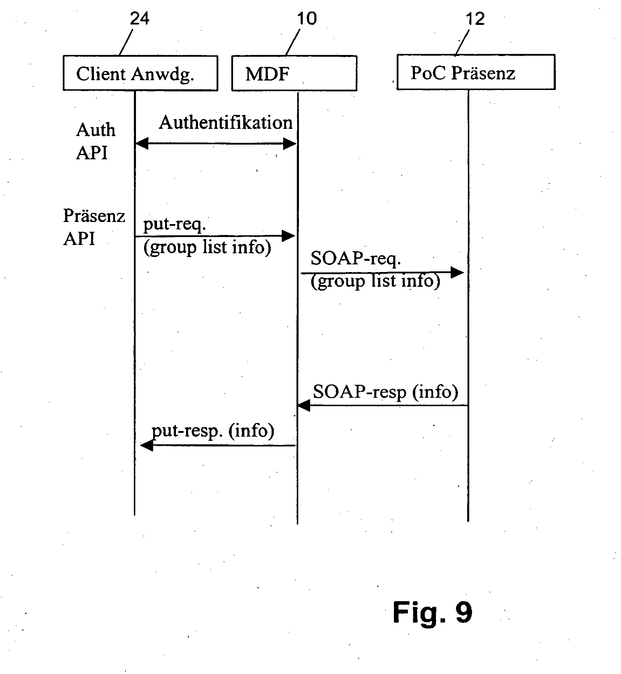

Die Figuren 8 und 9 zeigen mögliche Präsenz-Operationen der Clientanwendung 24 in Verbindung mit dem PoC Präsens Server 12.

Gemäß den Eigenschaften des Präsenz-API werden folgende Präsenz-Typen unterstützt:
o hole Präsenz vom Präsenz Server (Figur 8)
o platziere Präsenz auf dem Präsenz Server (Figur 9)

Außerdem muss eine Gruppeninformation (Group list info) geliefert werden Dieses API ist Teil einer übergreifenden, allgemeinen Anwendung; API liefert Zugang durch SOAP-Schnittstelle.

Figur 10 zeigt ein Beispiel für den Verfahrensablauf bei Mail-Operationen:
Gemäß den Eigenschaften des Mail API werden folgende Email-Typen und Verfahren unterstützt:
   o konvertiere Texte
   o konvertiere Wavs (Audio-Dateityp: wav)
   o anbieten von SMTP-Zugang

Im Allgemeinen bietet das MDF einen Werkzeugkasten von funktionellen APIs an. Die Kunden-Anwendung kann den Werkzeugkasten verwenden und eine eigene Anwendung aus ihm bauen.

### Liste der Abkürzungen

- MDF: Medienverteilfunktion (Media Distribution Function)
- PoC: Push to Talk over Cellular
- SMTP: Short Message Transport Protocol
- RTP: Real-Time Transport Protocol
- SIP: Session Initiated Protocol
- HTTP: Hypertext Transport Protocol
- SOAP: Simple Object Access Protocol
- API: Application Programming Interface
- ISIM: IP Multimedia Services Identity Module

## Patentansprüche

1. Verfahren zur Bereitstellung von Schnittstellen zur festen IP-Netzwelt, bei dem Nutzer- und Signaldaten über ein eigens dafür bestimmtes Netzelement (10) übertragen werden, wobei das Netzelement als Medienverteilfunktion (10) ausgebildet ist und über Schnittstellen mit einem PoC Server (11), einem PoC Präsenz Server (12), einem Konferenzsystem (15) und einem Datenübertragungsportal (17) verbunden ist, wobei die Medienverteilfunktion (10) ausgebildet ist, um Medien zwischen allen oben genannten Anwendungen und Anwendungsservern zu übertragen, **dadurch gekennzeichnet, dass** die Medienverteilfunktion (10) über Schnittstellen zusätzlich mit einem PoC XDMS Server (13), einem Email System (14) und einem Anwendungs- / Spieleserver (16) verbunden ist, wobei nach einer Authentifizierung eines Benutzers gegenüber einer Clientanwendung und einer Authentifizierung der Clientanwendung (24) gegenüber dem IMS Netzwerk fortgeschrittene Dienste zwischen der Clientanwendung (24) und der Medienverteilfunktion (10, 24) gestartet werden, welche Funktionen zur Übertragung von RTP Medien über den PoC Server (11) an ein Endgerät (25) und folgende Dienste umfassen: "Push" Übertragung einer PoC-Nachricht über PoC Application, Programming Interface in Form von Sprach-Bursts, Text zu Sprache, Sofort-Nachrichten, Spiele, Anwendungen, Dokumente, Holen / Platzieren von Gruppenlisten, Holen / Platzieren von Kontakt-Listen, Holen / Platzieren von Zugangs Kontroll-Listen, und Holen / Platzieren von Präsenz Informationen.

2. Verfahren nach Anspruch 1, **dadurch gekennzeichnet, dass** das Netzelement (10) eine Funktionen (21) zur Authentifizierung einer Clientanwendung gegenüber einem IMS Netzwerk und zur Authentifizierung eines Benutzers (22) gegenüber einer Clientanwendung (24) umfasst.

3. Verfahren nach einem der vorhergehenden Ansprüche, **dadurch gekennzeichnet, dass** das Netzelement (10) Funktionen zur Durchführung von XDMS Operationen zum Holen und Platzieren von Listen und Daten vom bzw. auf einem XMDS PoC Server (13) umfasst.

4. Verfahren nach einem der vorhergehenden Ansprüche, **dadurch gekennzeichnet, dass** das Netzelement (10) Funktionen zur Durchführung von Präsenz-Operationen einer Clientanwendung (24) in Verbindung mit einem PoC Präsens Server (12) umfasst.

5. Verfahren nach einem der vorhergehenden Ansprüche, **dadurch gekennzeichnet, dass** das Netzelement (10) Funktionen zur Durchführung von Mail-Operationen aufweist.

6. System zur Durchführung des Verfahrens gemäß den Ansprüchen 1 bis 5, mit mindestens zwei Einheiten eines Mobil- Kommunikationsnetzes und mindestens einem Systemelement in Form einer Medienverteilfunktion, MDF, (10), das dazu bestimmt ist, um die beiden Einheiten des Mobilkommunikationsnetzes miteinander zusammenzuschalten, ,
wobei die Medienverteilfunktion (10) und über Schnittstellen mit einem PoC Server (11), einem PoC Präsenz Server (12), einem Konferenzsystem (15) und einem Datenübertragungsportal (17) verbunden ist, wobei die Medienverteilfunktion (10) ausgebildet ist, um Medien zwischen allen oben genannten Anwendungen und Anwendungsservern zu übertragen, **dadurch gekennzeichnet,**
**dass** die Medienverteilfunktion (10) über Schnittstellen zusätzlich mit einem PoC XDMS Server (13), einem Email System (14) und einem Anwendungs- / Spieleserver (16) verbunden ist, und ein Authentifizierungsmodul (21) zur Authentifizierung eines Benutzers gegenüber einer Clientanwendung (24) und Authentifizierung der Clientanwendung gegenüber dem IMS Netzwerk vorhanden ist, wobei nach der Authentifizierung fortgeschrittene Dienste zwischen der Clientanwendung (24) und der Medienverteilfunktion (10, 24) gestartet werden, welche Funktionen zur Übertragung von RTP Medien über den PoC Server (11) an ein Endgerät (25) und folgende Dienste umfassen: "Push" Übertragung einer PoC-Nachricht über PoC Application, Programming Interface in Form von Sprach-Bursts, Text zu Sprache, Sofort-Nachrichten, Spiele, Anwendungen, Dokumente, Holen / Platzieren von Gruppenlisten, Holen / Platzieren von Kontakt-Listen, Holen / Platzieren von Zugangs Kontroll-Listen, und Holen / Platzieren von Präsenz Informationen..

7. System nach Anspruch 6, **dadurch gekennzeichnet, dass** das Systemelement (10) über Schnittstellen mit einem PoC Server (11) und einem PoC Präsenz Server (12) verbunden ist.

8. System nach einem der Ansprüche 6 oder 7, **dadurch gekennzeichnet, dass** das Systemelement (10) mit einem Konferenzsystem (15), sowie einem Datenübertragungsportal (17) verbunden ist.

## Claims

1. Method for providing interfaces to the world of fixed IP networks, in which user and signal data are transmitted via a network element (10) specially provided for this purpose, wherein the network element is designed as a media distribution function (10) and connected via interfaces to a PoC server (11), a PoC presence server (12), a conference system (15) and a data transmission portal (17), wherein the media distribution function (10) is designed to transmit media between all of the above-mentioned applications and applications servers, **characterised in that** the media distribution function (10) is in addition connected via interfaces to a PoC XDMS server (13), an email system (14) and an applications / games server (16), wherein, after authenticating a user to a client application and authenticating the client application (24) to the IMS network, advanced services are started between the client application (24) and the media distribution function (10, 24), which comprise functions for transmitting RTP media via the PoC server (11) to a terminal (25) and the following services: push-based transmission of a PoC message via PoC application, programming interface in the form of speech bursts, text to speech, instant messaging, games, applications, documents, retrieving / placing group lists, retrieving / placing contact lists, retrieving / placing access control lists, and retrieving / placing presence information.

2. Method according to claim 1, **characterised in that** the network element (10) comprises a function (21) for authenticating a client application to an IMS network and for authenticating a user (22) to a client application (24).

3. Method according to one of the preceding claims, **characterised in that** the network element (10) comprises functions for performing XDMS operations for retrieving and placing lists and data from or on an XDMS PoC server (13).

4. Method according to one of the preceding claims, **characterised in that** the network element (10) comprises functions for performing presence operations of a client application (24) in connection with a PoC presence server (12).

5. Method according to one of the preceding claims, **characterised in that** the network element (10) has functions for performing mail operations.

6. System for carrying out the method according to claims 1 to 5, having at least two units of a mobile communications network and at least one system element in the form of a media distribution function, MDF (10), which is intended to connect the two units of the mobile communications network to each other, wherein the media distribution function (10) is connected via interfaces to a PoC server (11), a PoC presence server (12), a conference system (15) and a data transmission portal (17), wherein the media distribution function (10) is designed to transmit media between all of the above-mentioned applications and applications servers, **characterised in that** the media distribution function (10) is in addition connected via interfaces to a PoC XDMS server (13), an email system (14) and an applications / games server (16), and there is an authentication module (21) for authenticating a user to a client application (24) and authenticating a client application to the IMS network, wherein, after the authentication, advanced services are started between the client application (24) and the media distribution function (10, 24), which comprise functions for transmitting RTP media via the PoC server (11) to a terminal (25) and the following services: push-based transmission of a PoC message via PoC application, programming interface in the form of speech bursts, text to speech, instant messaging, games, applications, documents, retrieving / placing group lists, retrieving / placing contact lists, retrieving / placing access control lists, and retrieving / placing presence information.

7. System according to claim 6, **characterised in that** the system element (10) is connected via interfaces to a PoC server (11) and a PoC presence server (12).

8. System according to one of claims 6 or 7, **characterised in that** the system element (10) is connected to a conference system (15), as well as to a data transmission portal (17).

## Revendications

1. Procédé pour fournir des interfaces avec le domaine du réseau Internet fixe, selon lequel des données d'utilisateur et des données de signaux sont transmises par l'intermédiaire d'un élément de réseau (10) prévu à cet effet, étant précisé que l'élément de réseau est conçu comme une fonction de distribution multimédia (10) et est relié par des interfaces à un serveur PoC (11), à un serveur de présence PoC (12), à un système de conférence (15) et à un portail de transmission de données (17), étant précisé que la fonction de distribution multimédia (10) est conçue pour transmettre des contenus multimédia entre tous les applications et serveurs d'application mentionnés précédemment, **caractérisé en ce que** la fonction de distribution multimédia (10) est reliée en supplément, par des interfaces, à un serveur PoC XDMS (13), à un système de courrier électronique (14) et à un serveur d'application/ jeu (16), étant précisé qu'après une authentification d'un utilisateur par rapport à une application client et une authentification de l'application client (24) par rapport au réseau IMS, des services avancés sont démarrés entre l'application client (24) et la fonction de distribution multimédia (10, 24), qui comprennent des fonctions pour la transmission de contenus multimédia RTP par l'intermédiaire du serveur PoC (11) à un terminal (25), et les services suivants : transmission "push" d'un message PoC par l'intermédiaire d'une application PoC, interface de programmation sous la forme de rafales vocales, texte-voix, messages instantanés, jeux, applications, documents, demande/placement de listes de groupes, demande/placement de listes de contacts, demande/placement de listes de contrôle d'accès, et demande/placement d'informations de présence.

2. Procédé selon la revendication 1, **caractérisé en ce que** l'élément de réseau (10) comprend des fonctions (21) pour l'authentification d'une application client par rapport à un réseau IMS et pour l'authentification d'un utilisateur (22) par rapport à une application client (24).

3. Procédé selon l'une des revendications précédentes, **caractérisé en ce que** l'élément de réseau (10) comprend des fonctions pour l'exécution d'opérations XDMS pour la demande et le placement de listes et de données à partir et en direction d'un serveur PoC XMDS (13).

4. Procédé selon l'une des revendications précédentes, **caractérisé en ce que** l'élément de réseau (10) comprend des fonctions pour l'exécution d'opérations de présence d'une application client (24) en liaison avec un serveur de présence PoC (12).

5. Procédé selon l'une des revendications précédentes, **caractérisé en ce que** l'élément de réseau (10) comporte des fonctions pour l'exécution d'opérations de messagerie.

6. Système pour la mise en oeuvre du procédé selon les revendications 1 à 5, avec au moins deux unités d'un réseau de communication mobile et avec au moins un élément de système en forme de fonction de distribution multimédia, MDF, (10), qui est destiné à relier les deux unités du réseau de communication mobile,
étant précisé que la fonction de distribution multimédia (10) est reliée par des interfaces à un serveur PoC (11), à un serveur de présence PoC (12), à un système de conférence (15) et à un portail de transmission de données (17), étant précisé que la fonction de distribution multimédia (10) est conçue pour transmettre des contenus multimédia entre tous les applications et serveurs d'application mentionnés précédemment, **caractérisé en ce que** la fonction de distribution multimédia (10) est reliée en supplément, par des interfaces, à un serveur PoC XDMS (13), à un système de courrier électronique (14) et à un serveur d'application/jeu (16), et il est prévu un module d'authentification (21) pour l'authentification d'un utilisateur par rapport à une application client (24) et l'authentification de l'application client par rapport au réseau IMS, étant précisé qu'après l'authentification, des services avancés sont démarrés entre l'application client (24) et la fonction de distribution multimédia (10, 24), qui comprennent des fonctions pour la transmission de contenus multimédia RTP par l'intermédiaire du serveur PoC (11) à un terminal (25), et les -services suivants : transmission "push" d'un message PoC par l'intermédiaire d'une application PoC, interface de programmation sous la forme de rafales vocales, texte-voix, messages instantanés, jeux, applications, documents, demande/placement de listes de groupes, demande/placement de listes de contacts, demande/placement de listes de contrôle d'accès, et demande/placement d'informations de présence.

7. Système selon la revendication 6, **caractérisé en ce que** l'élément de système (10) est relié par des interfaces à un serveur PoC (11) et à un serveur de présence PoC (12).

8. Système selon l'une des revendications 6 ou 7, **caractérisé en ce que** l'élément de système (10) est relié à un système de conférence (15) ainsi qu'à un portail de transmission de données (17).
